# EUROPEAN PATENT SPECIFICATION

(11) **EP 1 395 093 B1**
(45) Date of publication and mention of the grant of the patent: **30.09.2009**
(21) Application number: 03077173.7
(22) Date of filing: 10.07.2003
(51) Int. Cl.: H05B 37/02

(54) **Switching unit for controlling lights**
Schalteinheit zur Steuerung von Leuchten
Unité de commutation pour commander des lampes

(30) Priority: 20.08.2002 DE 10237975
(43) Date of publication of application: 03.03.2004
(73) Proprietor: Thomson Licensing, 92100 Boulogne-Billancourt (FR)
(72) Inventor: Mai, Dieter, 64291 Darmstadt (DE)
(74) Representative: Lindemann, Robert

(56) References cited:
- EP-A- 1 248 498
- DE-A- 19 743 580
- US-A- 4 656 475
- US-A- 5 897 158
- US-A1- 2001 005 118

## Description

In outside broadcast vehicles for transmitting radio or television broadcasts which are not recorded in studios, operator controls are provided for controlling the lighting, from which operator controls the lighting, for example the lighting of a control room or the lighting of a console can be controlled centrally. When such outside broadcast vehicles are constructed, latching and timing relays which are each permanently wired to one or more operator controls are used as switching means for switching the lighting equipment.

DE 197 43 580 A1 discloses a vehicle lighting system, in which a switching unit receives sensor inputs corresponding to exterior illumination. The switching unit controls the vehicle's headlights according to a programmed evaluation of the sensor signals.

US 5,897,158 discloses a self contained broadcast vehicle having a generator power source and display signs mounted on top, which may be electronic displays or displays using removable letters. The known broadcast vehicle is further equipped with interior lighting for the broadcast room.

Specific parts of the lighting system associated to the broadcast equipment must not be switched on depending on specific operating states of the outside broadcast vehicle. For example, the "ON-ATR" control light must not be switched on if the outside broadcast vehicle is travelling or if there is no means of mains voltage supply. It is therefore necessary to use sensors to generate a sensor signal or a switching signal which automatically switches off the "ON-AIR" control light if the outside broadcast vehicle is moving or the mains voltage supply is not present.

If two or more lighting states are mutually exclusive, the operator control which switches on a first lighting state using a switching means must simultaneously switch off a second lighting state. This results in the situation in which an operator control can be connected to a plurality of switching means, and one switching means can be connected to a plurality of operator controls.

Lighting states which are to be switched off again automatically some time after the switching operation takes place are implemented using timing relays.

As a result of the large number of signals generated by the operator controls and the sensors, as well as the even greater number of possible logic combinations with one another, the wiring of the light control system in outside broadcast vehicles is very complex.

The object of the invention is to simplify the wiring of the light control system in outside broadcast vehicles and to reduce the number of necessary components.

In order to achieve the object, a switching unit is proposed for controlling lights which receives control and sensor signals via control and sensor inputs, has a control unit and a memory for program and configuration data and contains switching outputs together with switching means which are actuated using switching signals. An interface with a program device is advantageously provided. The control inputs are connected here to the actuation elements of the control console. Sensor signals which represent the operating states of the outside broadcast vehicle, for example whether the outside broadcast vehicle is moving or in a stationary state, or signals which correspond to the state of the mains power supply, are present at the sensor inputs. The control unit is program-controlled and evaluates the control and sensor signals present at the control and sensor inputs in accordance with the configuration data stored in the memory. Switching signals which actuate the switching means assigned to the outputs in accordance with the result of the evaluation are generated by the control unit. The switching means may be, for example, relays or electronic switches. The switching means may be present directly in the switching unit or else be arranged in the lighting equipment to be switched. In the latter case, a switching line to the switching means is provided. The switching unit according to the invention for controlling lights makes the connection of operator controls to a plurality of switching means or the connection of switching means to a plurality of operator controls superfluous. Furthermore, timer functions can be implemented in the program, as a result of which the use of timing relays of a conventional design becomes superfluous. The use of a memory and an interface with a program device also makes it possible to adapt the function of the operator controls to the desires of the user at low cost, and to use the switching unit for various types of outside broadcast vehicles. Furthermore, the complete configuration can be implemented and simulated before starting to equip the outside broadcast vehicle. In addition, the switching unit can be easily expanded by changing programs.

A preferred exemplary embodiment of the switching unit according to the invention is illustrated in the drawing and will be explained in detail below. In said drawing:
- Figure 1: shows a block circuit diagram of the switching unit according to the invention,
- Figure 2: shows a truth table which demonstrates the dependence of the switched state of the switching outputs on various control and sensor signals.

In the figures, identical reference numbers designate identical or corresponding elements.

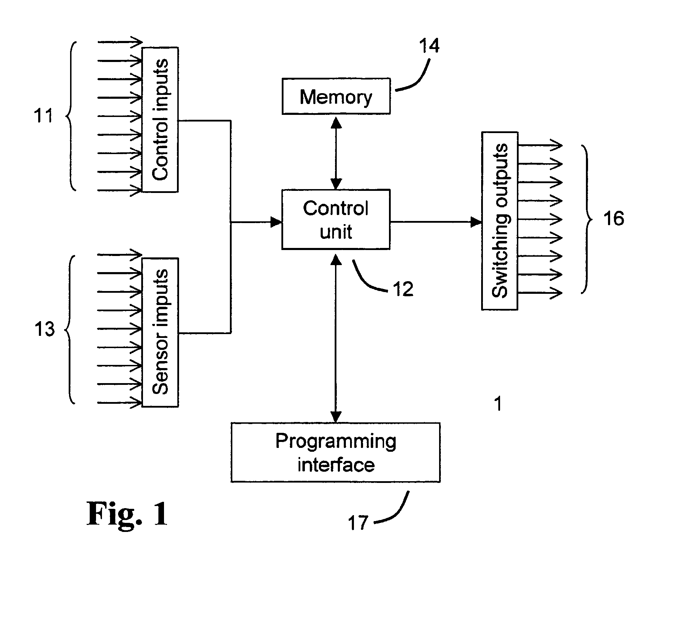

Figure 1 illustrates a block circuit diagram of a switching unit according to the invention for use in an outside broadcast vehicle which is not shown in Figure 1. According to the block circuit diagram, control signals from operator controls which are not illustrated in Figure 1 are fed via control inputs 11 to a control unit 12, said signals representing switch positions of an operator console (also not illustrated) for controlling the lights. These may be simple logic states, for example "On" and "Off". However, it is also possible to apply an analogue or digital signal to the control inputs 11, the magnitude or value of which signal corresponds to a specific degree of illumination.

Sensor signals are fed to the control unit 12 via sensor inputs 13. The sensor signals represent the operating states of an outside broadcast vehicle, for example the state of a mains power supply or whether the outside broadcast vehicle is moving.

The control and sensor signals which are fed via the control inputs 11 and the sensor inputs 13 are evaluated by the control unit 12 in accordance with configuration data stored in a memory 14, and said control unit 12 actuates switching outputs 16 in accordance with the result of the evaluation. The memory 14 also contains a program for the control unit 12.

A programming device which can be used to load the program or the configuration data into the switching unit can be connected by means of a programming interface 17.

The function of the switching unit which has been described so far is explained in more detail below by means of a number of examples.

The evaluation also includes, inter alia, the control whether the desired switched states which are selected by means of the control inputs are permitted. For example, the operation of the outside broadcast vehicle may not be authorized while it is travelling. The information travelling/stationary state is fed to the control unit via a corresponding sensor input. The control unit evaluates the desired switched state as unauthorized if the vehicle is moving. In this case, the emergency lighting is switched on, irrespective of the lighting originally desired by means of the activated switch.

Furthermore, it is possible to automatically switch on the emergency lighting in the event of a failure of the mains power supply which is signalled to the control unit 12 via a further corresponding sensor input 13. Via a timer which is integrated into the program of the control element it is possible for the emergency lighting to automatically be switched off again after a defined time period, for example 30 minutes, in order to save the battery, for example. The emergency lighting can be switched on again here by any switch or operator control of the light control system.

In addition to the examples described above, numerous other so-called positive couplings, for example in order to implement specific regulations of trade associations or legal regulations, are possible.

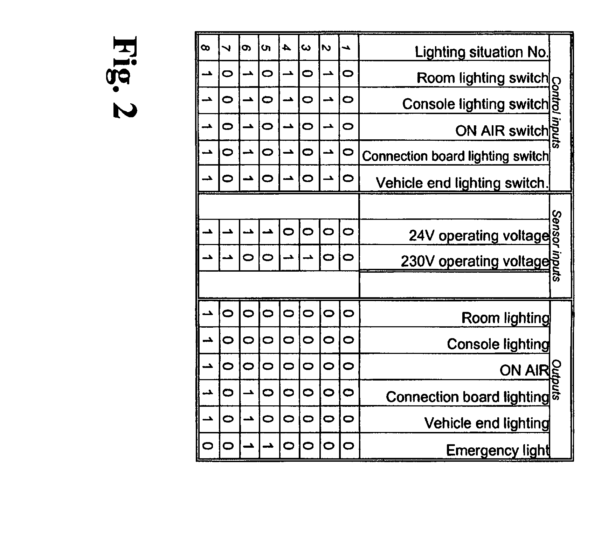

Figure 2 shows a truth table for an exemplary light control system in an outside broadcast vehicle. Further functions can be implemented according to requirements. The table shows the states of the switching signals for various switches, the state of the sensor signals for the mains power supply and the on-board voltage supply, and the actual switched states of the switching outputs for the lighting of the vehicle. Symbols "0" and "1" represent switch positions "off" and "on" and corresponding sensor signals, respectively.

The lighting states with the numbers 1, 3 and 7 are insignificant as all the switching signals require the "lighting off" switched state independently of the mains power supply of the outside broadcast vehicle. The lighting state 2 is also insignificant as no mains power supply whatsoever is present. All the outputs are consequently switched off. The lighting state in line 4 of the table describes a first positive coupling of control and sensor signals. Although the mains power supply is present, the control signals at the inputs do not bring about the desired switching of the lighting equipment as the on-board voltage supply is not ensured. The lighting state 5 is a further example of positive coupling of control and sensor signals. As only the on-board voltage supply is present, the emergency lighting is switched on automatically. Time limiting of the duration for which the lighting is switched on is not illustrated in the table. The lighting state 6 represents the situation after the time limitation mentioned above has expired. As soon as the emergency lighting switches itself off automatically, the activation of any switch leads to the emergency lighting switching on again. The lighting situation illustrated in line 8 of the table describes the normal operation in which the lighting is switched in accordance with the position of the switch.

## Claims

1. Outside broadcast vehicle with a mains power supply and a switching unit that controls lights associated with the broadcast equipment via switching outputs (16), **characterised In that** the broadcast vehicle provides information about whether it is moving or standing still to sensor inputs (13) of the switching unit, that information about the operating state of the mains power supply is provided to sensor inputs (13) of the switching unit, that control signals are applied to the switching unit via control inputs (11), and that switching means are provided for the switching outputs (16), wherein a control unit (12) controls the switching means provided for the switching outputs (16) in dependence of control signals and signals at the sensor inputs (13) according to program and configuration data contained in a memory (14).

2. Outside broadcast vehicle according to claim 1, **characterized in that** an interface (17) with a programming device is provided with the switching unit.

3. Outside broadcast vehicle according to claim 1, **characterized in that** the switching unit is adapted to switch on emergency lighting when signal providing information about the mains power supply indicates a failure.

4. Outside broadcast vehicle according to claim 3, **characterized in that** the switching unit is adapted to switch off emergency lighting under timer control.

5. Outside broadcast vehicle according to claim 4, **characterized in that** the switching unit is adapted to re-activate emergency lighting in response to activation of any control input.

6. Outside broadcast vehicle according to claim 1, **characterised in that** the switching unit is adapted to activate emergency lighting upon receiving a sensor input indicating the vehicle is moving and any other control input being activated.

7. Outside broadcast vehicle according to claim 1, **characterised in that** the switching unit is adapted to control the switching states of the switching outputs (16) in accordance with mutually excluding switching states according to program and configuration data stored in the memory (14) of the switching unit.

## Patentansprüche

1. Übertragungswagen mit einer Energieversorgung und mit einer Schalteinheit, welche über Schaltausgänge (16) der Übertragungsausrüstung zugeordnete Beleuchtungen steuert,
**dadurch gekennzeichnet, dass**
der Übertragungswagen an Sensoreingänge (13) der Schalteinheit Informationen darüber bereitstellt, ob er sich bewegt oder stillsteht, dass an Sensoreingängen (13) der Schalteinheit Informationen über den Betriebszustand der Energieversorgung bereitgestellt werden, dass über Steuereingänge (11) Steuersignale an die Schalteinheit angelegt werden und dass für die Schaltausgänge (16) Schaltmittel vorgesehen sind, wobei eine Steuereinheit (12) die für die Schaltausgänge (16) vorgesehenen Schaltmittel in Abhängigkeit von Steuersignalen und Signalen an den Sensoreingängen (13) gemäß einem Programm und in einem Speicher (14) enthaltenen Konfigurationsdaten steuert.

2. Übertragungswagen nach Anspruch 1 **dadurch gekennzeichnet, dass** bei der Schalteinheit eine Schnittstelle (17) mit einem Programmiergerät vorgesehen ist.

3. Übertragungswagen nach Anspruch 1 **dadurch gekennzeichnet, dass** die Schalteinheit so ausgelegt ist, dass sie eine Notbeleuchtung einschaltet, wenn das Signal, das Informationen über die Energieversorgung bereitstellt, einen Ausfall angibt.

4. Übertragungswagen nach Anspruch 3 **dadurch gekennzeichnet, dass** die Schalteinheit so ausgelegt ist, dass sie die Notbeleuchtung zeitgesteuert ausschaltet.

5. Übertragungswagen nach Anspruch 4 **dadurch gekennzeichnet, dass** die Schalteinheit so ausgelegt ist, dass sie die Notbeleuchtung in Reaktion auf die Aktivierung irgendeiner Steuereingabe wieder aktiviert.

6. Übertragungswagen nach Anspruch 1 **dadurch gekennzeichnet, dass** die Schalteinheit so ausgelegt ist, dass sie die Notbeleuchtung bei Empfang einer Sensoreingabe, die angibt, dass sich das Fahrzeug bewegt und dass irgendeine andere Steuereingabe aktiviert ist, aktiviert.

7. Übertragungswagen nach Anspruch 1 **dadurch gekennzeichnet, dass** die Schalteinheit so ausgelegt ist, dass sie die Schaltzustände der Schaltausgänge (16) in Übereinstimmung mit sich gegenseitig ausschließenden Schaltzuständen gemäß einem Programm und Konfigurationsdaten steuert, die in dem Speicher (14) der Schalteinheit gespeichert sind.

## Revendications

1. Véhicule de reportage doté d'une alimentation secteur et d'une unité de commutation qui commande des lampes associées à l'équipement de diffusion via des sorties de commutation (16), **caractérisé en ce que** le véhicule de reportage fournit des informations indiquant s'il se déplace ou s'il reste immobile à des entrées de détection (13) de l'unité de commutation, que des informations sur l'état de fonctionnement de l'alimentation secteur sont fournies aux entrées de détection (13) de l'unité de commutation, que des signaux de commande sont appliqués à l'unité de commutation via des entrées de commande (11) et qu'un moyen de commutation est fourni pour les sorties de commutation (16), où une unité de commande (12) commande le moyen de commutation fourni pour les sorties de commutation (16) en fonction de signaux de commande et de signaux au niveau des entrées de détection (13) selon des données de programme et de configuration contenues dans une mémoire (14).

2. Véhicule de reportage selon la revendication 1, **caractérisé en ce qu'**une interface (17) dotée d'un dispositif de programmation est fournie avec l'unité de commutation.

3. Véhicule de reportage selon la revendication 1, **caractérisé en ce que** l'unité de commutation est adaptée pour mettre sous tension un éclairage de sécurité lorsque le signal fournissant des informations sur l'alimentation secteur indique une défaillance.

4. Véhicule de reportage selon la revendication 3, **caractérisé en ce que** l'unité de commutation est adaptée pour mettre hors tension l'éclairage de sécurité selon une commande de temporisation.

5. Véhicule de reportage selon la revendication 4, **caractérisé en ce que** l'unité de commutation est adaptée pour réactiver l'éclairage de sécurité en réponse à l'activation d'une quelconque entrée de commande.

6. Véhicule de reportage selon la revendication 1, **caractérisé en ce que** l'unité de commutation est adaptée pour activer un éclairage de sécurité après la réception d'une entrée de détection indiquant que le véhicule se déplace et de toute autre entrée de commande activée.

7. Véhicule de reportage selon la revendication 1, **caractérisé en ce que** l'unité de commutation est adaptée pour commander les états de commutation des sorties de commutation (16) conformément à une exclusion mutuelle des états de commutation selon des données de programme et de configuration stockées dans la mémoire (14) de l'unité de commutation.
